# EUROPEAN PATENT APPLICATION

(11) **EP 4 546 603 A1**
(43) Date of publication of application: **30.04.2025**
(21) Application number: 24195512.9
(22) Date of filing: 21.08.2024
(51) Int. Cl.: H02J 7/00

(54) **BATTERY PACK CONFIGURED TO BE CAPABLE OF SUPPLYING POWER TO A POWER TOOL**

(30) Priority: 23.10.2023 CN 202311378696
(71) Applicant: Nanjing Chervon Industry Co., Ltd., Nanjing, Jiangsu 211106 (CN)
(72) Inventor: LI, Jing, Nanjing, Jiangsu 211106 (CN); HU, Xue, Nanjing, Jiangsu 211106 (CN)
(74) Representative: Sun, Yiming

(57) **Abstract**

Provided is a battery pack configured to be capable of supplying power to a power tool. The battery pack includes a housing assembly; multiple cells disposed in the housing assembly; a first interface configured to be connectable to a first charging device and configured to be capable of supplying power to the power tool; a second interface configured to be connectable to a second charging device; and a power control module configured to be connected to the second interface. The power control module is used for changing the charge power and/or discharge power of the second interface according to the temperature of the battery pack. The preceding technical solution is adopted so that a safer battery pack with a longer service life for a power tool can be provided.

## Description

### TECHNICAL FIELD

The present application relates to an energy storage device and, in particular, to a battery pack configured to be capable of supplying power to a power tool.

### BACKGROUND

A portable power tool is applicable in various scenarios of production and life. A rechargeable battery pack is configured to power the power tool so that the power tool is free from wires and more convenient for a user to use. Generally, an external charging/discharging interface terminal on the battery pack can be connected to a power interface of the power tool and can also be connected to a charging port of a battery pack charger. With the development of battery pack technologies, the design of a Type-C interface on the battery pack for the power tool has gradually become a new development trend. In this manner, the battery pack for the power tool can supply power to a mobile terminal or other electrical devices with Type-C interfaces and can be charged using a Type-C charger, providing more room for the development of the battery pack.

This part provides background information related to the present application, and the background information is not necessarily the existing art.

### SUMMARY

To solve the deficiencies in the existing art, an object of the present application is to provide a safer battery pack with a longer service life for a power tool.

To achieve the preceding object, the present application adopts the technical solutions below.

A battery pack configured to be capable of supplying power to a power tool includes a housing assembly; multiple cells disposed in the housing assembly; a first interface configured to be connectable to a first charging device and configured to be capable of supplying power to the power tool; a second interface configured to be connectable to a second charging device; and a power control module configured to be connected to the second interface. The power control module is used for changing the charge power and/or discharge power of the second interface according to the temperature of the battery pack.

In some examples, the second interface is a Type-C interface.

In some examples, the power control module includes a temperature detection unit for detecting the temperature of the battery pack.

In some examples, the temperature detection unit includes a first temperature detection unit and/or a second temperature detection unit, where the first temperature detection unit is used for detecting the temperature of the power control module in the battery pack, and the second temperature detection unit is used for detecting the temperature of the multiple cells in the battery pack.

In some examples, the second temperature detection unit is a thermistor.

In some examples, the power control module further includes a management unit and an adjustment unit, where the adjustment unit is connected to the multiple cells, the management unit is connected to the adjustment unit and the temperature detection unit, and the management unit controls the adjustment unit based on the temperature detected by the temperature detection unit and a preset threshold.

In some examples, the adjustment unit includes a voltage control module used for, when the temperature of the battery pack is greater than or equal to the preset threshold, reducing the voltage reaching the second interface.

In some examples, the adjustment unit includes a current control module used for, when the temperature of the battery pack is greater than or equal to the preset threshold, reducing the current reaching the second interface.

In some examples, the adjustment unit includes a voltage control module and a current control module, where when the temperature of the battery pack is greater than or equal to the preset threshold, the voltage control module reduces the voltage reaching the second interface, and the current control module reduces the current reaching the second interface.

In some examples, when the temperature of the battery pack is less than the preset threshold and the power of the battery pack is less than the maximum power, the management unit controls the adjustment unit to increase the output power and/or input power of the second interface.

In some examples, the preset threshold includes a first preset threshold and a second preset threshold, the first preset threshold is a temperature threshold of the power control module in the battery pack, and the second preset threshold is a temperature threshold of the multiple cells in the battery pack, where the first preset threshold is greater than the second preset threshold.

In some examples, the power control module includes a current value and time detection unit for detecting a current value of the battery pack and the time during which the current value is maintained.

In some examples, the nominal voltage of the first interface is greater than 10 V, and the discharge voltage of the second interface is greater than or equal to 5 V and less than or equal to 20 V.

In some examples, the battery pack includes an indicator light for indicating the charge power and/or discharge power of the battery pack.

In some examples, the indicator light performs an indication based on a relationship between the charge power and/or discharge power of the battery pack and a preset power threshold.

In some examples, a battery pack configured to be capable of supplying power to a power tool includes a housing assembly; multiple cells disposed in the housing assembly; a first interface configured to be connectable to a first charging device and configured to be capable of supplying power to the power tool; a second interface configured to be connectable to a second charging device; and a power control module configured to be connected to the second interface. The power control module is used for changing the charge power and/or discharge power of the second interface according to a parameter of the battery pack.

In some examples, the second interface is a Type-C interface.

In some examples, a battery pack configured to be capable of supplying power to a power tool includes a housing assembly; multiple cells disposed in the housing assembly; a first interface configured to be connectable to a first charging device and configured to be capable of supplying power to the power tool; a second interface configured to be connectable to a second charging device; and a power control module configured to be connected to the second interface. The power control module controls the charge power and/or discharge power of the second interface so that a parameter of the battery pack is less than a preset threshold.

In some examples, the second interface is a Type-C interface.

In some examples, after the parameter of the battery pack reaches the preset threshold, the power control module reduces the charge power and/or discharge power of the second interface.

The benefit of the present application lies in that by changing the charge/discharge power of the second interface based on the temperature of the battery pack, the following problem is solved: the battery pack is in a high temperature state for a long time, bringing in certain dangers; and the safety and life of the battery pack are improved.

### BRIEF DESCRIPTION OF DRAWINGS

FIG. 1 is a schematic view of a power supply system of a battery pack according to an example.
FIG. 2 is a schematic view of a charging system of a battery pack according to an example.
FIG. 3 is a schematic diagram of an internal charging control circuit of a battery pack according to an example.
FIG. 4 is a schematic diagram of an internal charging control circuit of a battery pack according to an example.
FIG. 5 is a schematic diagram of a power control circuit of a battery pack according to an example.
FIG. 6 is a schematic diagram of another power control circuit of a battery pack according to an example.
FIG. 7 is a schematic diagram of a temperature detection unit of a battery pack according to an example.
FIG. 8 is a schematic diagram of an adjustment unit of a battery pack according to an example.
FIG. 9 is a flowchart of a control method for a battery pack according to an example.

### DETAILED DESCRIPTION

Before any example of the present application is explained in detail, it is to be understood that the present application is not limited to its application to the structural details and the arrangement of components set forth in the following description or illustrated in the preceding drawings.

In the present application, the term "comprising", "including", "having", or any other variant thereof is intended to encompass a non-exclusive inclusion so that a process, method, article, or device that includes a series of elements not only includes those elements but also includes other elements that are not expressly listed or further includes elements that are inherent to such a process, method, article, or device. In the absence of more limitations, an element defined by the statement "including a ..." does not exclude the presence of additional identical elements in a process, method, article, or device including the element.

In the present application, the term "and/or" is an association relationship describing associated objects and indicates that three relationships may exist. For example, A and/or B may indicate that A exists alone, both A and B exist, and B exists alone. In addition, in the present application, the character "/" generally indicates an "and/or" relationship between associated objects before and after the character "/".

In the present application, the term "connected", "combined", "coupled", or "mounted" may be directly "connected", "combined", "coupled", or "mounted" and may also be indirectly "connected", "combined", "coupled", or "mounted". Among them, for example, direct connection means that two parts or assemblies are connected together without intermediate pieces, and indirect connection means that two parts or assemblies are separately connected to at least one intermediate piece and the two parts or assemblies are connected to each other by the at least one intermediate piece. Furthermore, "connected" and "coupled" are not limited to physical or mechanical connections or couplings and may include electrical connections or couplings.

In the present application, it is to be understood by those of ordinary skill in the art that a relative term (for example, "about", "approximately", or "basically") used in conjunction with quantities or conditions is inclusive of the stated value and has the meaning indicated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus a certain percentage (such as 1%, 5%, 10%, or more) of an indicated value. A value not modified by the relative term should also be disclosed as a particular value with a tolerance. In addition, when expressing a relative angular position relationship (for example, basically parallel or basically perpendicular), "basically" may refer to plus or minus a certain degree (such as 1 degree, 5 degrees, 10 degrees, or more) based on an indicated angle.

In the present application, it is to be understood by those of ordinary skill in the art that the function implemented by an assembly may be implemented by one assembly, multiple assemblies, one part, or multiple parts. Similarly, a function implemented by a part may be implemented by one part, one assembly, or a combination of parts.

In the present application, the terms "upper", "lower", "left", "right", "front", "rear", and other orientation words are described by the orientations and position relations shown in the drawings and should not be understood as a limitation to the examples of the present application. In addition, in this context, it also needs to be understood that when it is mentioned that an element is connected "above" or "below" another element, the element not only can be directly connected "above" or "below" the other element but also can be indirectly connected "above" or "below" the other element through an intermediate element. Further, it should be understood that orientation words such as the upper side, lower side, left side, right side, front side, and rear side not only represent perfect orientations but also may be understood as lateral orientations. For example, the lower part may include directly below, lower left, lower right, lower front, and lower back.

In the present application, the terms "controller", "processor", "central processing unit", "CPU", and "MCU" are interchangeable. Where a unit such as the "controller", the "processor", the "central processing unit", the "CPU", or the "MCU" is used to implement specific functions, these functions may be implemented by a single one of the preceding units or multiple preceding units unless otherwise indicated.

In the present application, the term "device", "module", or "unit" is used to implement a specific function in the form of hardware or software.

In the present application, the terms "computing", "judging", "controlling", "determining", "identifying", and the like refer to the operation and processes of a computer system or similar electronic computing device (for example, the controller, the processor, or the like).

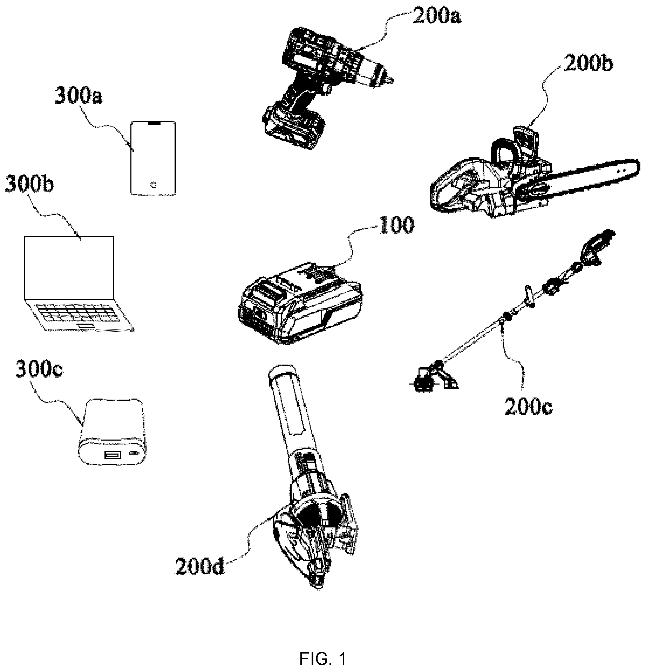

In this example, various power tools 200 can be powered by a battery pack 100. FIG. 1 illustrates several common power tools, such as an electric drill 200a, a chainsaw 200b, a string trimmer 200c, and a blower 200d. It is to be noted that the power tool 200 may be a handheld power tool, such as a drill, a hedge trimmer, or a sander. Alternatively, the power tool 200 may be a table tool, such as a table saw or a miter saw. Alternatively, the power tool 200 may be a push power tool, such as a push mower or a push snow thrower. Alternatively, the power tool 200 may be a riding power tool, such as a riding mower, a riding vehicle, or an all-terrain vehicle. Alternatively, the power tool 200 may be a robotic tool, such as a robotic mower or a robotic snow thrower. In some examples, the power tool 200 may be an electric drill, an electric lamp, an electric vehicle, or the like. In some examples, the power tool 200 may be a garden tool, such as a hedge trimmer, a blower, a mower, or a chainsaw. Alternatively, the power tool 200 may be a decorating tool, such as a screwdriver, a nail gun, a circular saw, or a sander. In some examples, the power tool 200 may be a vegetation care tool, such as a string trimmer, a mower, a hedge trimmer, or a chainsaw. Alternatively, the power tool 200 may be a cleaning tool, such as a blower, a snow thrower, or a washer. Alternatively, the power tool 200 may be a drilling tool, such as a drill, a screwdriver, a wrench, or an electric hammer. Alternatively, the power tool 200 may be a sawing tool, such as a reciprocating saw, a jigsaw, or a circular saw. Alternatively, the power tool 200 may be a table tool, such as a table saw, a miter saw, a metal cutter, or an electric router. Alternatively, the power tool 200 may be a sanding tool, such as an angle grinder or a sander.

In this example, various electrical devices 300 may be powered by the battery pack 100. The electrical devices may be other household appliances or personal electrical devices in addition to the preceding power tools 200, such as a smartphone 300a, a laptop 300b, and a mobile power supply 300c in FIG. 1, or the electrical devices may be a soy milk maker, a grinder, and the like.

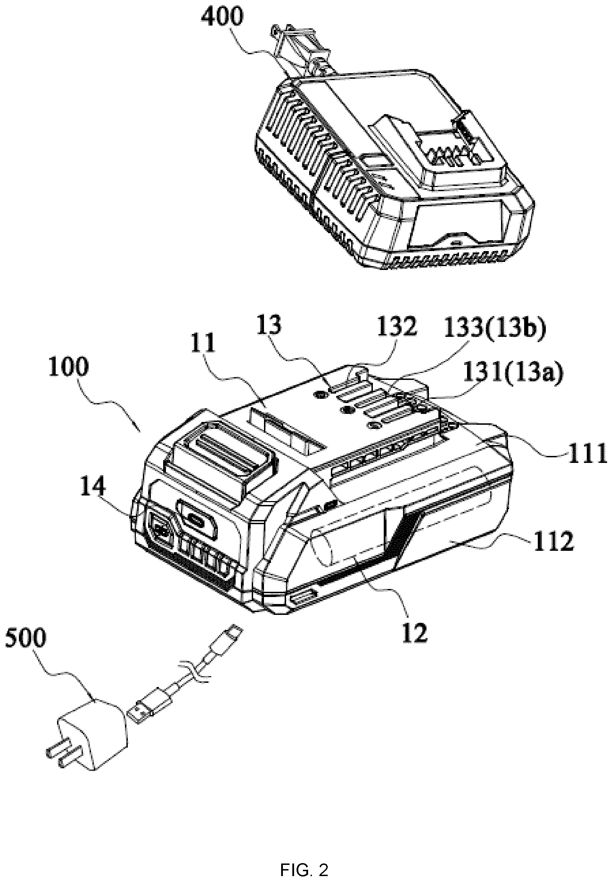

The battery pack 100 shown in FIG. 2 may include a housing assembly 11, multiple cells 12 accommodated in the housing assembly 11, and a first interface 13 and a second interface 14 formed on the housing assembly 11. The housing assembly 11 may include an upper housing 111 and a lower housing 112. The multiple cells 12 accommodated in the housing assembly 11 may be connected in various manners, such as connection in series, connection in parallel, or a combination of connection in series and connection in parallel. This example does not limit the connection manners of the cells 12.

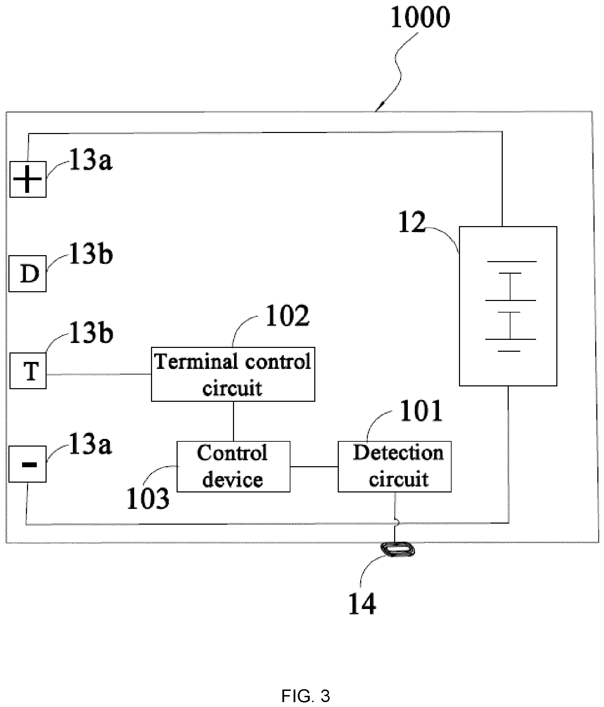

Referring to FIGS. 2 and 3, the first interface 13 may be connected to a first charging device 400 so that the cells 12 in the battery pack 100 are charged. In this example, the first interface 13 may include at least a positive connection terminal 131 and a negative connection terminal 132 or may further include a communication terminal 133, and the positive connection terminal 131, the negative connection terminal 132, and the communication terminal 133 can be directly coupled to charging terminals on the first charging device 400. In this example, the first interface 13 may be directly coupled to a power interface on the power tool 200 so that the power tool 200 is powered. In this example, the first interface 13 may further include power terminals 13a and a non-power terminal 13b. The so-called power terminals 13a may be the preceding positive connection terminal 131 and the preceding negative connection terminal 132, and the non-power terminal 13b may be the communication terminal 133 and may further include a temperature detection terminal T or an ID identification terminal B.

The second interface 14 may be a Type-C interface and is connectable to a second charging device 500 so that the cells 12 in the battery pack 100 are charged. Further, the second interface 14 is connectable to the electrical device 300 with a Type-C interface so that the electrical device 300 is powered.

In an example, the second charging device 500 may be a charger for a mobile phone or a computer.

In an example, the first interface 13 and the second interface 14 can work simultaneously. For example, the battery pack 100 may be charged through the first interface 13 and discharged through the second interface 14 at the same time; or the battery pack 100 may be discharged through the first interface 13 and charged through the second interface 14 at the same time; or the battery pack 100 may be charged through the first interface 13 and charged through the second interface 14 at the same time. In some examples, the battery pack 100 may be discharged through the first interface 13 and discharged through the second interface 14 at the same time. However, in fact, when charging is performed through the two interfaces at the same time, the battery pack 100 has certain safety risks. For example, the charging systems of the two interfaces are independent of each other; when the cells are charged through the two interfaces at the same time, the current may exceed the maximum allowable charge current of the cells, affecting the safety of the cells.

To avoid the case where charging is performed through the two interfaces at the same time, at least the charging state of the first interface 13 may be controlled. For example, whether charging is performed through the first interface 13 is controlled according to the charging situation of the second interface 14. In fact, after the second interface 14 of the battery pack 100 is connected to the second charging device 500, the first interface 13 may be controlled such that charging cannot be performed through the first interface 13, or the first interface 13 is controlled to be in a non-charging state. The first interface 13 being in the non-charging state may be understood as that the charging circuit in the battery pack 100 cannot obtain charging electrical energy through the first interface 13 or may be understood as that the first charging device 400 connected to the first interface 13 cannot charge the battery pack 100.

Referring to FIG. 3, a charging control circuit 1000 is disposed in the battery pack 100. The charging control circuit 1000 can control at least the charging state of the first interface 13. In this example, the charging control circuit 1000 may include at least a detection circuit 101, a terminal control circuit 102, and a control device 103. The detection circuit 101 is capable of detecting at least whether the second interface 14 is connected to the second charging device 500. The terminal control circuit 102 can change at least the terminal state of the non-power terminal 13b. The control device 103 is configured to be capable of controlling the terminal control circuit 102 to operate to change the terminal state of the non-power terminal 13b. It is to be noted that the change of the terminal state may be understood as a change of an object connected to an input terminal and/or output terminal of the power terminal 13a and/or the non-power terminal 13b in the charging control circuit 1000 or may be understood as a change of an electrical signal at the input terminal or output terminal of the power terminal 13a and/or the non-power terminal 13b.

In some examples, in the charging control circuit 1000, the detection circuit 101 and the control device 103 of the terminals may be disposed in one circuit. Alternatively, one element can detect whether the second interface 14 is connected to the second charging device 500 and control the terminal control circuit 102 to operate, that is, one element can implement the functions of the detection circuit 101 and the control device 103.

In this example, the detection circuit 101 may determine whether the second interface 14 is connected to the second charging device 500 according to the change of the electrical signal at the second interface 14. Alternatively, a control chip identifies the communication data to determine whether the second interface 14 is connected to the second charging device 500.

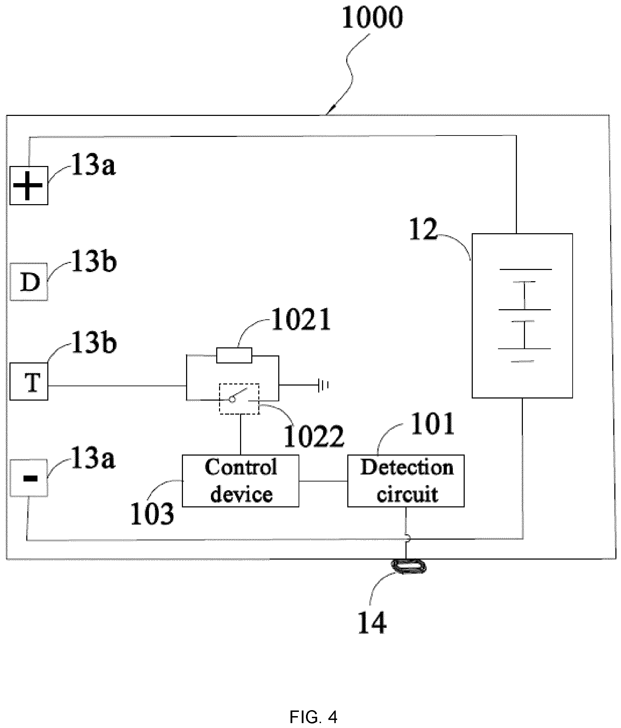

In this example, the control device 103 may determine whether the second interface 14 is connected to the second charging device 500 according to the electrical signal at the second interface 14 detected by the detection circuit 101. When the control device 103 determines that the second interface 14 is connected to the second charging device 500, the control device 103 may control the terminal control circuit 102 to operate so that a terminal connection state of at least one non-power terminal 13b changes. For example, one non-power terminal 13b may be changed from an original non-grounded state to a grounded state. In FIG. 4, the terminal control circuit 102 may include a thermistor 1021 and a controllable switch 1022 connected in parallel, where an end of the thermistor 1021 and the controllable switch 1022 connected in parallel is connected to a non-power terminal T, and the other end of the thermistor 1021 and the controllable switch 1022 connected in parallel is grounded. When the control device 103 determines that the second interface 14 is connected to the second charging device 500, the control device 103 controls the controllable switch 1022 to be turned on so that the thermistor 1021 is shorted to ground and the non-power terminal T is grounded. After the thermistor terminal 1021 is shorted to ground, the first charging device 400 connected to the first interface 13 can monitor the abnormal temperature at the non-power terminal T of the battery pack 100 so that over-temperature protection is performed to stop charging the battery pack 100 or not charge the battery pack 100. That is to say, when the second interface 14 is connected to the second charging device 500, the charging control circuit 1000 can change at least the connection state of the non-power terminal 13b so that the first charging device 400 connected to the first interface 13 can trigger one or more charging protection functions according to the connection state of the non-power terminal 13b, thereby preventing the battery pack 100 from being charged through the first charging device 400. The charging protection function triggered by the first charging device 400 according to the connection state of the non-power terminal 13b may include over-temperature protection, short-circuit protection, reverse connection protection, or low-voltage protection.

In this example, the change of an interface state of the first interface 13 may cause the following: when the first charging device 400 is connected to the first interface 13, it is considered that the battery pack 100 may be overheated, or part of the circuit is accidentally short-circuited, or the charging interface of the first charging device 400 is reversely connected to the first interface 13, or the voltage of the battery pack 100 is too low to match the first charging device 400. The preceding problems cause the first charging device 400 to trigger charging protection and not charge the battery pack 100. In fact, the battery pack 100 in the present application may not have the preceding problems, and by changing the interface state of the first interface 13 or changing at least the terminal connection state of the non-power terminal 13b, the first charging device 400 mistakenly believes that the battery pack 10 has the preceding problems, and then the first charging device 400 triggers charging protection. In this manner, the battery pack 100 can be prevented from being charged through the first interface 13 and the second interface 14 at the same time.

In some examples, when the second interface 14 is connected to the second charging device 500, the charging control circuit 1000 can change at least the connection state of the non-power terminal 13b so that a battery management module in the battery pack 100 can trigger the charging protection function of the battery pack 100 or trigger at least the charging protection function of charging through the first interface 13.

In other examples, the battery pack 100 can change the interface state of the first interface 13 so that the power tool 200 connected to the first interface 13 triggers a discharging protection function. In this manner, the battery pack 100 cannot be discharged through the first interface 13 while being charged through the second interface 14.

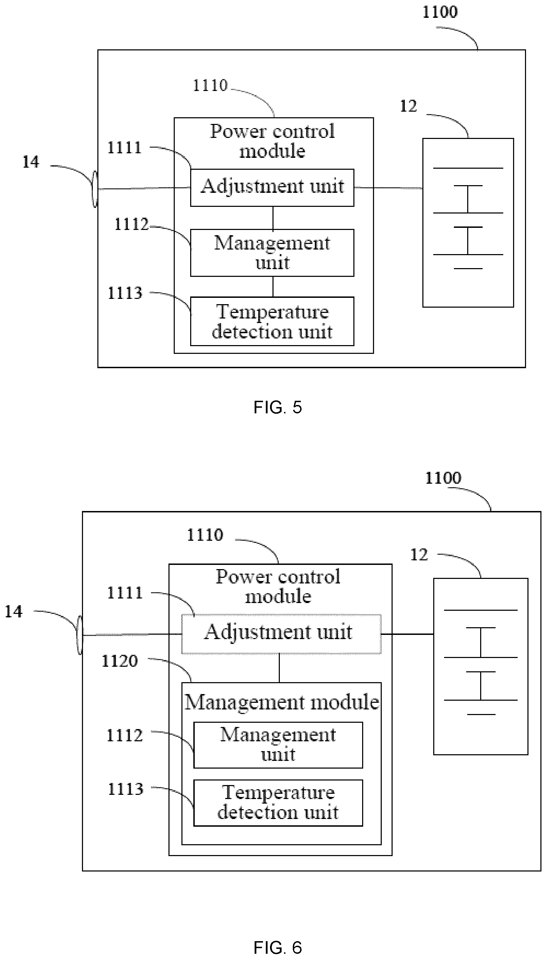

Referring to FIG. 5, a power control circuit 1100 is disposed in the battery pack 100. The power control circuit 1100 can control at least the charge power and/or discharge power of the second interface 14. In this example, the power control circuit 1100 includes at least a power control module 1110 connected to the second interface 14. The power control module 1110 is used for changing the charge power and/or discharge power of the second interface 14 according to the temperature of the battery pack 100. The nominal voltage of the battery pack 100 is greater than 10 V. For example, the nominal voltage of the battery pack 100 may be 12 V, and thus the nominal voltage of the first interface 13 may also be 12 V.

As shown in FIG. 5, in some examples, the power control module 1110 includes an adjustment unit 1111, a management unit 1112, and a temperature detection unit 1113. An end of the adjustment unit 1111 is connected to the second interface 14, and the other end of the adjustment unit 1111 is connected to the multiple cells 12. That the power control module 1110 is connected to the second interface 14 is specifically that the adjustment unit 1111 in the power control module 1110 is connected to the second interface 14. An end of the management unit 1112 is connected to the adjustment unit 1111, and the other end of the management unit 1112 is connected to the temperature detection unit 1113. The temperature detection unit 1113 is used for detecting the temperature of the battery pack 100 and transmitting the detected temperature of the battery pack 100 to the management unit 1112. The management unit 1112 controls the adjustment unit 1111 based on the received temperature of the battery pack 100. The adjustment unit 1111 changes the power of the second interface 14 based on the control of the management unit 1112. The power may be the charge power when the second interface 14 is in a charging state or the discharge power when the second interface 14 is in a discharging state, which is not limited in the present application.

As shown in FIG. 6, in some examples, the power control module 1110 includes the adjustment unit 1111 and a management module 1120. An end of the adjustment unit 1111 is connected to the second interface 14, and the other end of the adjustment unit 1111 is connected to the multiple cells 12. The management module 1120 is connected to the adjustment unit 1111. The management module 1120 includes the management unit 1112 and the temperature detection unit 1113. The temperature detection unit 1113 is used for detecting the temperature of the battery pack 100. That the management module 1120 controls the adjustment unit 1111 based on the temperature of the battery pack 100 is specifically that the management unit 1112 in the management module 1120 controls the adjustment unit 1111 based on the temperature of the battery pack 100.

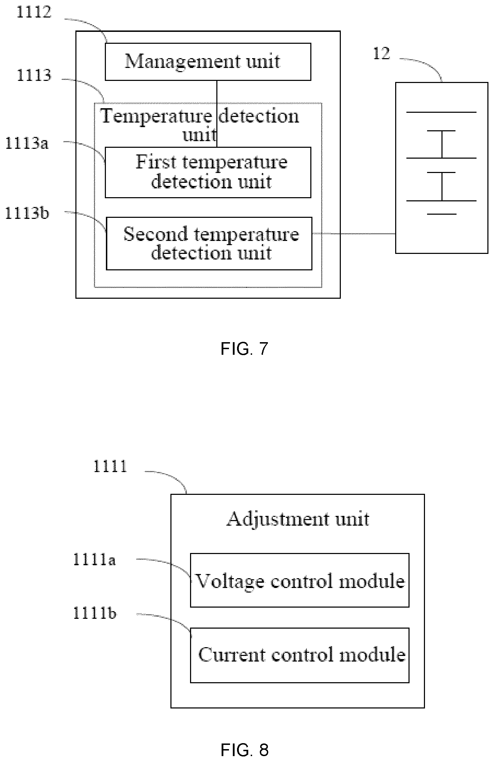

As shown in FIG. 7, in some examples, the temperature detection unit 1113 includes a first temperature detection unit 1113a and a second temperature detection unit 1113b, the first temperature detection unit 1113a is connected to the management unit 1112, and the second temperature detection unit 1113b is connected to the multiple cells 12. The first temperature detection unit 1113a is used for detecting the temperature of the power control module 1110, and the second temperature detection unit 1113b is used for detecting the temperature of the multiple cells 12. In this case, the temperature of the battery pack 100 detected by the temperature detection unit 1113 includes both the temperature of the power control module 1110 and the temperature of the cells 12. Optionally, if the temperature detection unit 1113 includes only the first temperature detection unit 1113a, then the temperature of the battery pack 100 detected by the temperature detection unit 1113 includes only the temperature of the power control module 1110. Optionally, if the temperature detection unit 1113 includes only the second temperature detection unit 1113b, then the temperature of the battery pack 100 detected by the temperature detection unit 1113 includes only the temperature of the cells 12. The second temperature detection unit 1113b may include, but is not limited to, a thermistor, which is not limited in the present application.

The temperature of the battery pack 100 is determined by the magnitude of the current in the battery pack 100 and the time. For example, the larger the current value is and the longer the current is maintained, the higher the temperature of the battery pack 100 is. Therefore, in some examples, the temperature detection unit 1113 may be replaced by a current value and time detection unit. The function and connection manner of the current value and time detection unit are consistent with those of the temperature detection unit 1113, and the details are not repeated here.

As shown in FIG. 8, in some examples, the adjustment unit 1111 may include a voltage control module 1111a and a current control module 1111b. When the temperature of the battery pack 100 detected by the temperature detection unit 1113 is greater than or equal to a preset threshold, the management unit 1112 controls the adjustment unit 1111 to change the charge power and/or discharge power of the second interface 14. When the temperature detection unit 1113 includes both the first temperature detection unit 1113a and the second temperature detection unit 1113b, the preset threshold includes a first preset threshold and a second preset threshold, the first preset threshold is a temperature threshold of the power control module 1110, and the second preset threshold is a temperature threshold of the multiple cells 12. Since the multiple cells 12 are more sensitive to temperature and more affected at high temperatures than the power control module 1110, the first preset threshold is greater than the second preset threshold. The first preset threshold may be 100°C, the second preset threshold may be 60°C, and the first preset threshold and the second preset threshold may also be any other values set according to empirical values and are not limited in the present application. In this case, when the temperature detected by the first temperature detection unit 1113a is greater than or equal to the first preset threshold or the temperature detected by the second temperature detection unit 1113b is greater than or equal to the second preset threshold, the management unit 1112 needs to control the adjustment unit 1111. Specifically, the voltage control module 1111a may reduce the voltage reaching the second interface 14 from the cells 12, and the current control module 1111b may reduce the current reaching the second interface 14 from the cells 12. The voltage control module 1111a may reduce the voltage reaching the second interface 14 from the cells 12 in a stepwise manner according to a fixed voltage value or not according to a fixed voltage value. Similarly, the current control module 1111b may reduce the current reaching the second interface 14 from the cells 12 in a stepwise manner according to a fixed current value or not according to a fixed current value. In this manner, the charge power and/or discharge power of the second interface 14 can be reduced so that the temperature of the battery pack 100 decreases, thereby avoiding the following: the battery pack 100 maintains a high temperature for a long time, causing safety hazards to the battery pack 100 and making the life of the battery pack 100 unguaranteed. The voltage control module 1111a and the current control module 1111b may perform the reduction operation at the same time so that the temperature of the battery pack 100 decreases rapidly; or only one of the two modules may perform the reduction operation, which is not limited in the present application. The specific selection may be made according to the temperature of the battery pack 100 exceeding the preset threshold.

The discharge voltage of the second interface 14 is greater than or equal to 5 V and less than or equal to 20 V, that is, the output voltage range of the second interface 14 is 5 V to 20 V. Therefore, when the voltage control module 1111a reduces the voltage reaching the second interface 14 in the discharging state from the cells 12, the voltage reaching the second interface 14 is not less than 5 V.

In some examples, the adjustment unit 1111 may include only the voltage control module 1111a. In some examples, the adjustment unit 1111 may include only the current control module 1111b. The present application does not limit the control module specifically included in the adjustment unit 1111.

When the temperature of the battery pack 100 detected by the temperature detection unit 1113 is less than the preset threshold and the power of the battery pack 100 is less than the maximum power, it means that the output power and/or input power of the second interface may be increased. When the temperature detection unit 1113 includes both the first temperature detection unit 1113a and the second temperature detection unit 1113b, it is required that the temperature detected by the first temperature detection unit 1113a is less than the first preset threshold and the temperature detected by the second temperature detection unit 1113b is less than the second preset threshold. In this manner, the management unit 1112 controls the adjustment unit 1111 to increase the charge power and/or discharge power of the second interface 14 so that while the safety and life of the battery pack 100 are ensured, the charging speed and/or discharging speed of the battery pack 100 can be increased, and the charging and discharging performance of the battery pack 100 can be improved. Optionally, when the adjustment unit 1111 includes the voltage control module 1111a and the current control module 1111b, the voltage control module 1111a may increase the voltage reaching the second interface 14 from the cells 12, and the current control module 1111b may increase the current reaching the second interface 14 from the cells 12. The voltage control module 1111a may increase the voltage reaching the second interface 14 from the cells 12 in a stepwise manner according to a fixed voltage value or not according to a fixed voltage value. Similarly, the current control module 1111b may increase the current reaching the second interface 14 from the cells 12 in a stepwise manner according to a fixed current value or not according to a fixed current value. The voltage control module 1111a and the current control module 1111b may perform the boost operation at the same time; or only one of the two modules may perform the boost operation, which is not limited in the present application. The specific selection may be made according to the power situation of the battery pack 100. In addition, since the output voltage range of the second interface 14 is 5 V to 20 V, when the voltage control module 1111a increases the voltage reaching the second interface 14 in the discharging state from the cells 12, the voltage reaching the second interface 14 is not higher than 20 V.

In addition, when the temperature of the battery pack 100 detected by the temperature detection unit 1113 is less than the preset threshold and the power of the battery pack 100 has reached the maximum power, no operation is performed on the battery pack 100 at this time.

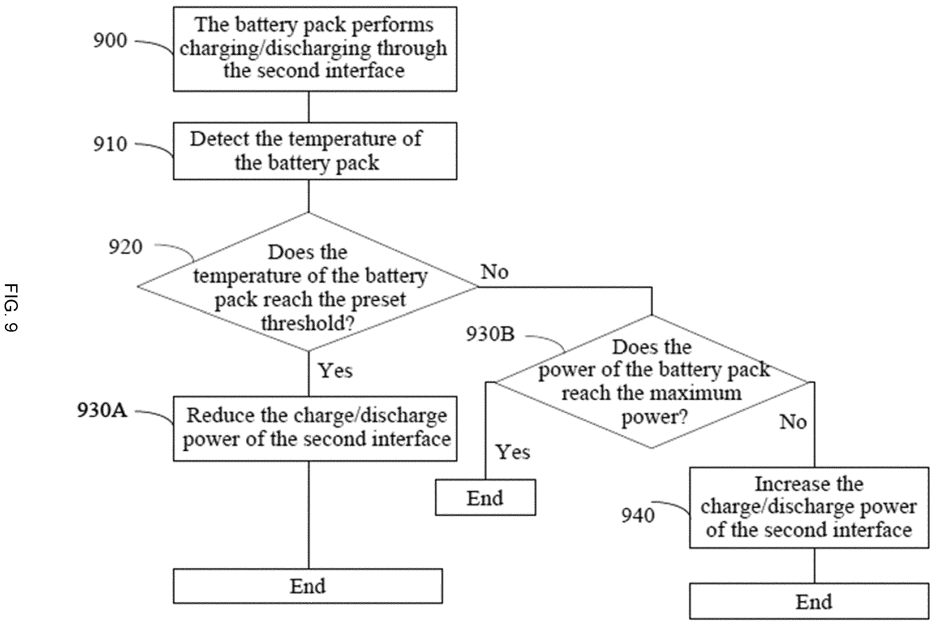

FIG. 9 proposes a control method for a battery pack. The control method for a battery pack includes the steps below.

In step 900, the battery pack 100 performs charging/discharging through the second interface 14.

The battery pack 100 is in a state of being charged/discharged through the second interface 14.

In step 910, the temperature of the battery pack 100 is detected.

When it is determined in step 900 that the battery pack 100 performs charging/discharging through the second interface 14, the temperature of the battery pack 100 is detected by the temperature detection unit 1113 described above in the present application.

In step 920, whether the temperature of the battery pack 100 reaches the preset threshold is determined.

After the temperature of the battery pack 100 is detected in step 910, when the temperature of the battery pack 100 is greater than or equal to the preset threshold (that is, reaches the preset threshold), step 930A is performed; and when the temperature of the battery pack 100 is less than the preset threshold (that is, does not reach the preset threshold), step 930B is performed.

In step 930A, the charge/discharge power of the second interface 14 is reduced.

After the temperature of the battery pack 100 is greater than or equal to the preset threshold, specifically, the management unit 1112 of the present application controls the adjustment unit 1111 to reduce the charge power and/or discharge power of the second interface 14. In this manner, the temperature of the battery pack 100 decreases, the probability of potential safety hazards of the battery pack 100 is reduced, and the safety and service life of the battery pack 100 are improved.

In step 930B, whether the power of the battery pack 100 reaches the maximum power is determined.

After it is determined that the temperature of the battery pack 100 is less than the preset threshold, when the power of the battery pack 100 reaches the maximum power, although the temperature of the battery pack 100 is less than the preset threshold, no operation is performed on the battery pack 100. When the power of the battery pack 100 has not reached the maximum power and the temperature of the battery pack 100 is less than the preset threshold, step 940 is performed.

In step 940, the charge/discharge power of the second interface 14 is increased.

If it is determined in step 930B that the temperature of the battery pack 100 is less than the preset threshold and the power of the battery pack 100 has not reached the maximum power, specifically, the management unit 1112 controls the adjustment unit 1111 to increase the charge power and/or discharge power of the second interface 14, thereby increasing the charging/discharging speed of the battery pack 100.

In some examples, since the temperature of the battery pack 100 rises more during discharging than during charging, when the battery pack 100 leaves the factory, the rated charge power of the battery pack 100 may be set to be greater than the rated discharge power.

In some examples, the battery pack 100 further includes an indicator light for indicating the charge power and discharge power of the battery pack 100. Optionally, when the charge power and/or discharge power of the battery pack 100 is greater than or equal to a preset power threshold, the indicator light flashes at a larger frequency; and when the charge power and/or discharge power of the battery pack 100 is less than the preset power threshold, the indicator light flashes at a smaller frequency. Optionally, the indicator light may include only one light. The indicator light is always on when the charge power and/or discharge power of the battery pack 100 is greater than or equal to the preset power threshold; and the indicator light is off when the charge power and/or discharge power of the battery pack 100 is less than the preset power threshold. Optionally, the indicator light may include two lights which are a first indicator light and a second indicator light. The first indicator light is always on when the charge power and/or discharge power of the battery pack 100 is greater than or equal to the preset power threshold; and the second indicator light is always on when the charge power and/or discharge power of the battery pack 100 is less than the preset power threshold. Optionally, the indicator light may include four lights arranged in the same row. The last indicator light is always on when the charge power and/or discharge power of the battery pack 100 is greater than or equal to the preset power threshold; and the four indicator lights light up one after another in sequence when the charge power and/or discharge power of the battery pack 100 is less than the preset power threshold. In addition, the indicator light may be in any other form in which whether the charge power and/or discharge power is greater than the preset power threshold can be displayed, which is not limited in the present application. The preset power threshold is determined according to empirical values.

The basic principles, main features, and advantages of the present application are shown and described above. It is to be understood by those skilled in the art that the preceding examples do not limit the present application in any form, and all technical solutions obtained through equivalent substitutions or equivalent transformations fall within the scope of the present application.

## Claims

1. A battery pack (100) configured to be capable of supplying power to a power tool (200), comprising:
a housing assembly (11);
a plurality of cells (12) disposed in the housing assembly;
a first interface (13) configured to be connectable to a first charging device (400) and configured to be capable of supplying power to the power tool;
a second interface (14) configured to be connectable to a second charging device (500); and
a power control module (1110) configured to be connected to the second interface;
wherein the power control module is configured to change charge power and/or discharge power of the second interface according to temperature of the battery pack.

2. The battery pack of claim 1, wherein the second interface is a Type-C interface.

3. The battery pack of claim 1, wherein the power control module comprises a temperature detection unit (1113) for detecting the temperature of the battery pack.

4. The battery pack of claim 3, wherein the temperature detection unit comprises a first temperature detection unit (1113a) and/or a second temperature detection unit (1113b), the first temperature detection unit is configured to detect temperature of the power control module in the battery pack, and the second temperature detection unit is configured to detect temperature of the plurality of cells in the battery pack.

5. The battery pack of claim 4, wherein the second temperature detection unit is a therm istor.

6. The battery pack of claim 3, wherein the power control module further comprises a management unit (1112) and an adjustment unit (1111), the adjustment unit is connected to the plurality of cells, the management unit is connected to the adjustment unit and the temperature detection unit, and the management unit controls the adjustment unit based on the temperature detected by the temperature detection unit and a preset threshold.

7. The battery pack of claim 6, wherein the adjustment unit comprises a voltage control module (1111a) used for, when the temperature of the battery pack is greater than or equal to the preset threshold, reducing a voltage reaching the second interface.

8. The battery pack of claim 6, wherein the adjustment unit comprises a current control module (1111b) used for, when the temperature of the battery pack is greater than or equal to the preset threshold, reducing a current reaching the second interface.

9. The battery pack of claim 6, wherein the adjustment unit comprises a voltage control module (1111a) and a current control module(1111b), and the voltage control module reduces a voltage reaching the second interface and the current control module reduces a current reaching the second interface when the temperature of the battery pack is greater than or equal to the preset threshold.

10. The battery pack of claim 6, wherein when the temperature of the battery pack is less than the preset threshold and power of the battery pack is less than maximum power, the management unit controls the adjustment unit to increase output power and/or input power of the second interface.

11. The battery pack of claim 6, wherein the preset threshold comprises a first preset threshold and a second preset threshold, the first preset threshold is a temperature threshold of the power control module in the battery pack, the second preset threshold is a temperature threshold of the plurality of cells in the battery pack, and the first preset threshold is greater than the second preset threshold.

12. The battery pack of claim 1, wherein the power control module comprises a detection unit for detecting a current value of the battery pack and time during which the current value is maintained.

13. The battery pack of claim 1, wherein a nominal voltage of the first interface is greater than 10 V, and a discharge voltage of the second interface is greater than or equal to 5 V and less than or equal to 20 V.

14. The battery pack of claim 1, further comprising an indicator light for indicating the charge power and/or discharge power of the battery pack.

15. The battery pack of claim 14, wherein the indicator light performs an indication based on a relationship between the charge power and/or discharge power of the battery pack and a preset power threshold.
